# EUROPÄISCHE PATENTSCHRIFT

(11) **EP 0 424 959 B1**
(45) Veröffentlichungstag und Bekanntmachung des Hinweises auf die Patenterteilung: **01.02.1995**
(21) Anmeldenummer: 90120588.0
(22) Anmeldetag: 26.10.1990
(51) Int. Cl.: C07F 7/08, C07F 7/21, C08G 77/04

(54) **Organosilylalkylaromaten**
Organosilylalkyl-aromatic compounds
Composés organosilyl alcoyliques-aromatiques

(30) Priorität: 26.10.1989 DE 3935638
(43) Veröffentlichungstag der Anmeldung: 02.05.1991
(73) Patentinhaber: Consortium für elektrochemische Industrie GmbH, D-81379 München (DE)
(72) Erfinder: Häberle, Norman, Dr., W-8000 München 21 (DE); Haas, Wolfgang, Dr., W-8034 Germering (DE); Brader, Leonhard, W-8165 Fischbachau (DE); Kreuzer, Franz-Heinrich, Dr., W-8033 Martinsried (DE)

(56) Entgegenhaltungen:
- EP-A- 304 720
- EP-A- 0 163 495
- EP-A- 0 282 294
- EP-A- 0 291 082
- EP-A- 0 322 703
- FR-A- 2 245 663
- JOURNAL OF THE CHEMICAL SOCIETY, Mai 1964, Seiten 1548-1553; R.W. BOTT et al.:"Organosilicon compounds. part XXVII. The reaction between trichlorosilane and4-chlorophenylbut-1-enes"
- CHEMICAL ABSTRACTS, Band 55, Nr. 21, 16. Oktober 1961, Spalte 21039,Zusammenfassung h, Columbus, Ohio, US; E.A. CHERNYSHEV et al.: "Synthesis ofsilicon-containing aromatic acids and amines", & ZHUR. OBSHCHEI KHIM.30, 4058-60(1960)

## Beschreibung

Die vorliegende Erfindung betrifft Organosiliciumverbindungen mit direkt oder indirekt über eine Alkylkette gebundenem substituierten Benzolkern.

### Stand der Technik

E. A. Chernyshev und N. G. Tolstika (Chemical Abstracts, Vol. 55, 21 039g, 1961) beschreiben die Herstellung von 4-[Trialkylsilyl-(C₁- bis C₂-)alkyl]benzoesäuren aus den entsprechenden Bromphenylverbindungen durch Umsetzung mit Magnesium und CO₂. Durch R. W. Bott et al. (Journal of the Chemical Society, 1964, Seite 1548-1553) sind 4-[Trimethylsilyl-(C₁- bis C₄-)alkyl]chlorbenzole bekannt. In den vorgenannten Literaturstellen wird die Verwendungsmöglichkeit der genannten Verbindungen als Ausgangsstoffe für Flüssigkristalle nicht erwähnt. In EP-A-304 720 (offengelegt am 1.3.1989, F.-H. Kreuzer et al., Consortium für elektrochemische Industrie GmbH) wird die Herstellung von 4-Dimethylsilylbenzoesäure aus 1,4-Dihalogenbenzol geschildert. Allgemein ist dort die Verwendung von difunktionellen Silanen zur Herstellung von Flüssigkristallanzeigen erwähnt. Die dort vorgestellten Verbindungen sind jedoch wegen der großen sterischen Hinderung der direkt am Benzolkern sitzenden Dimethylsilylgruppe nicht als Ausgangsmaterialien für Flüssigkristalle geeignet.

In der EP-A 322 703 sind Flüssigkristalle beschrieben, die zweifach mit Alkylenphenyloxy- oder Alkylenoxyphenylcarbonyloxygruppen substituierte Disiloxangruppen im Molekül aufweisen.

### Aufgabe

Aufgabe der vorliegenden Erfindung war es, neue Ausgangsstoffe, insbesondere zur Herstellung von Flüssigkristallen, bereitzustellen. Eine weitere Aufgabe der vorliegenden Erfindung war es, neue silylierte Benzolderivate als Ausgangsstoffe für Flüssigkristalle herzustellen, wobei die Silylgruppe(n) im daraus hergestellten Flüssigkristall nicht die Orientierung desselben durch ihre sterische Hinderung erschweren.

### Beschreibung

### Neue Verbindungen

Die vorstehend geschilderten Aufgaben werden durch die vorliegende Erfindung gelöst durch Verbindungen der Formel 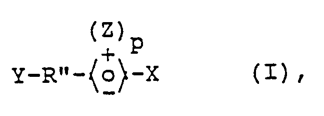
worin
- Y: einen Organosiliciumrest,
- X: einen Rest der Formel -COOH, -CN, -CHO oder -OH, wobei die letztgenannte Hydroxylgruppe durch eine Schutzgruppe blockiert sein kann,
- Z: gleiche oder verschiedene Halogenatome in 2-, 3-, 5- oder 6-Position zum Rest X,
- p: einen Wert von 0 bis 4 und
- R'': einen gegebenenfalls substituierten Rest der Formel

-(O)_{q}-R''''ᵣ-(O)ₛ- ,

bedeuten, worin
q und s jeweils unabhängig voneinander die Zahl 0 oder 1 bedeuten und
r einen Wert von 1 bis 3 einnimmt,
R'''' ein zweiwertiger, gegebenenfalls substituierter Kohlenwasserstoffrest mit bis zu 20 Kohlenstoffatomen ist, insbesondere ein Alkylen-, Cycloalkylen-, Cycloalkenylen-, Arylen-, Alkarylen- oder Aralkylenrest,
mit der Maßgabe, daß q, r, s und R'''' so gewählt sind, daß sich als Rest R'' ein zweiwertiger Rest ergibt, der den Rest Y mit dem Benzolkern über eine Kette von mindestens drei Atomen verbindet.

Als Substituenten am Rest R'''' sind Halogenatome bevorzugt. Vorzugsweise sind R'' und R'''' jedoch nicht substituiert.

Vorzugsweise sind die erfindungsgemäßen Verbindungen der Formel (I) solche der Formel (II) 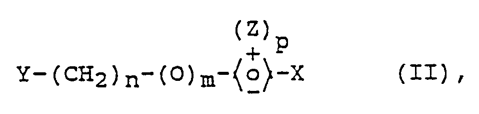
worin
- n: eine ganze Zahl im Wert von mindestens 2,
- m: eine ganze Zahl im Wert von 0 oder 1,wobei die Summe n + m mindestens 3 beträgt,
bedeuten und X, Y, Z und p die für Formel (I) angegebene Bedeutung haben.

Vorzugsweise hat n einen Wert von höchstens 20. Vorzugsweise hat p in den obigen Formeln (I) und (II) den Wert 0. Vorzugsweise ist der Rest Y in den oben aufgeführten Formeln (I) und (II) ein linearer Silanyl- oder Siloxanylrest der Formel (III)

R-c-[SiR₂O]ₜ-SiR₂-(T)ᵥ- (III)

oder ein Cyclosiloxanylrest der Formel (IV)

[SiR₂O]ᵤSiRO-(T)ᵥ- (IV),

wobei in den obigen Formeln (III) und (IV) unabhängig voneinander
- **R**: gleiche oder verschiedene, gegebenenfalls substituierte Kohlenwasserstoffreste mit 1 bis 18 Kohlenstoffatomen, deren gegebenenfalls vorhandene Substituenten vorzugsweise Halogenatome, Cyanoreste, Mercapto- und Aminogruppen sind,
- **t**: eine ganze Zahl im Wert von mindestens 0,
- **u**: eine ganze Zahl im Wert von mindestens 2 , vorzugsweise höchstens 8,
- **v**: eine ganze Zahl im Wert von mindestens 0 , vorzugsweise mit einem Wert von höchstens 5, insbesondere von höchstens 1,
- **T**: ein Rest der Formel -R˝˝-SiR₂-, wobei R und R˝˝ die oben unter den Formeln (III), (IV) bzw. (I) angegebenen Bedeutungen haben,
bedeuten.

Vorzugsweise haben t und u jeweils unabhängig voneinander einen Wert von höchstens 20, insbesondere höchstens 10, speziell höchstens 5.

Insbesondere hat t den Wert 1 oder 2 und u den Wert 2, 3 oder 4.

Speziell sind als Reste R Fluoralkylreste mit 1 bis 18 Kohlenstoffatomen zu nennen.

Die oben bezeichneten Verbindungen lassen besonders vorteilhaft nach den folgenden Verfahren herstellen:

### Verfahren

### Verfahren (1):

Verbindungen der Formel (II) werden vorzugsweise hergestellt durch
**A)** Umsetzung von Verbindungen der Formel (V) 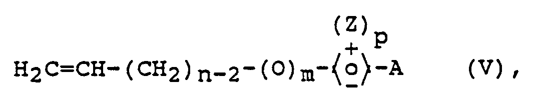 worin
   - **A**: eine der Bedeutungen von Q hat oder eine durch eine Schutzgruppe geschützte Hydroxyl- oder Carboxylgruppe ist, wobei
   - **Q**: ein Halogenatom, vorzugsweise ein Chlor- oder Bromatom ist und n, m, p und Z die für Formel (I) angegebenen Bedeutungen haben,
   mit Verbindungen der Formel **Y-H** in Gegenwart von Platinmetallen und/oder deren Verbindungen zu Verbindungen der Formel (VI) 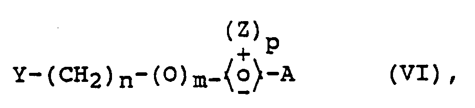 und
**B1)** - falls X im gewünschten Produkt der Formel (II) ein Rest der Formel -COOH sein soll - Umsetzung von Verbindungen der Formel (VI), wobei A ein Rest der Bedeutung Q ist, mit Magnesium und anschließend mit CO₂, oder Umsetzung von Verbindungen der Formel (VI), wobei A eine mit einer Schutzgruppe blockierter Carboxylrest ist, unter Abspaltung der Schutzgruppe.
**B2)** - falls X im gewünschten Produkt der Formel (II) ein Rest der Formel -CN sein soll - Umsetzung von Verbindungen der Formel (VI), wobei A ein Rest der Bedeutung Q ist, mit Cyaniden, vorzugsweise mit Kupfercyanid,
**B3)** - falls X im gewünschten Produkt der Formel (II) ein Rest der Formel -OH sein soll und der Rest A in Formel (VI) eine durch eine Schutzgruppe blockierte Hydroxylgruppe ist -
   Entfernung der Schutzgruppe auf an sich bekannte Weise,
**B4)** - falls X im gewünschten Produkt der Formel (II) ein Rest der Formel -CHO sein soll - Umsetzung von Verbindungen der Formel (VI), wobei A ein Rest der Bedeutung Q ist, mit Magnesium und dann mit N,N-Dimethylformamid und anschließender saurer Hydrolyse in an sich bekannter Weise.

Das durch das "H" in der oben genannten Formel Y-H bezeichnete Wasserstoffatom ist vorzugsweise ein direkt an ein Siliciumatom gebundenes Wasserstoffatom.

Als Schutzgruppe für eine Carboxylgruppe ist eine Trialkylsilylgruppe bevorzugt, insbesondere die Trimethylsilylgruppe.

Als Platinmetalle und/oder deren Verbindungen werden vorzugsweise Platin und/oder dessen Verbindungen eingesetzt. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Di-methylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungs-produkt aus in 1-Octen gelöstem Platintetrachlorid mit sec.-Butylamin, oder Ammonium-Platinkomplexe gemäß EP-B 110 370.

Platinkatalysator wird vorzugsweise in Mengen 0,5 bis 500 Gewichts-ppm (Gewichtsteilen je Million Gewichtsteilen), insbesondere 2 bis 400 Gewichts-ppm, jeweils berechnet als elementares Platin und bezogen auf das Gesamtgewicht der Ausgangsstoffe, eingesetzt.

Die Umsetzung von Verbindung der Formel (VI) gemäß Schritt B1) mit Magnesium zur Grignardverbindung und die anschließende Reaktion der Grignardverbindung mit CO₂ erfolgt in an sich bekannter Weise.

Die Umsetzung bemäß Schritt B₂) erfolgt vorzugsweise in Gegenwart von CuCN bei Temperaturen von 80 °C bis 250 °C, insbesondere in einem inerten Lösungsmittel.

Die in Formel (I) enthaltenen bzw. die in Schritt B3) abzuspaltenden Schutzgruppen sind an sich bekannt. Es sind dies insbesondere die folgenden Gruppen:
Trialkylsilylgruppen, wie Trimethylsilyl-, tert.-Butyldimethylsilyl- und Triethylsilylgruppen; Alkoxymethylengruppen, wie Methylmethylen- und Ethylmethylengruppen; p-Toluolsulfonylgruppen; substituierte oder unsubstituierte Benzylgruppen.

Bevorzugte Schutzgruppen sind Trialkylsilyl- und Alkyloxymethylengruppen und Estergruppen, insbesondere die Trimethylsilyl- und die Methoxymethylen-und p-Toluolsulfonylgruppen.

Diese Gruppen können sauer oder alkalisch, insbesondere bei höherer Temperatur, leicht abgespalten werden.

Falls X in Formel (I) bzw. (II) eine durch eine Schutzgruppe blockierte Hydroxylgruppe sein soll, erübrigt sich selbstverständlich der oben genannte Schritt B3).

### Verfahren (2):

Die Ausgangsverbindungen der Formel (V), für die m=0 bedeutet, also solche der Formel (X) 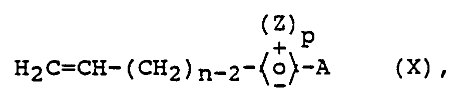
wobei A, Z, n und p die oben angegebenen Bedeutungen haben, werden vorzugsweise hergestellt durch
**A)** Umsetzung von Verbindungen der Formel (VII) 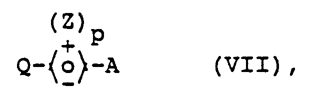 worin
   - **Q**: ein Halogenatom, vorzugsweise ein Chlor- oder Bromatom und
   - **A**: eine der Bedeutungen von Q hat oder eine durch eine Schutzgruppe geschützte Hydroxylgruppe bedeuten und Z und p die in oben angegebenen Bedeutungen haben,
   mit Magnesium zu Grignardverbindungen (VIII) 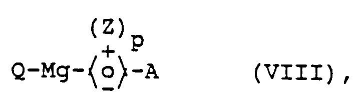
   und schließlich
**B)** Umsetzung von Grignardverbindungen der Formel (VIII) mit Verbindungen der Formel (IX)

   H₂C=CH-(CH₂)ₙ₋₂-Q (IX),

   zu Verbindungen der Formel (X)
   zu Verbindungen der Formel (X)

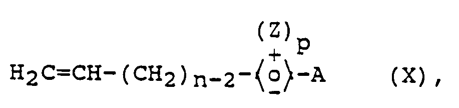

Die letztgenannte Umsetzung von Verbindung (VIII) mit Verbindung (IX) wird vorzugsweise in Gegenwart von Lithiumtetrachlorocuprat durchgeführt. Analoge Reaktionen sind von S. B. Mirviss (Journal of Organic Chemistry, Band 54, Seiten 1948-1951 (1989) ) beschrieben; im vorliegenden Verfahren sind jedoch, was in der oben zitierten Literaturstelle nicht beschrieben ist, auch Alkyl-Aryl-Verknüpfungen bei höheren Temperaturen als 50 °C möglich und nötig, was zu merklich höheren Ausbeuten führt;
**C)** Umsetzung von Verbindungen der Formel (X) mit Verbindungen der Formel **Y-H** in Gegenwart von Platinmetallen und/oder deren Verbindungen zu Verbindungen der Formel (XI)

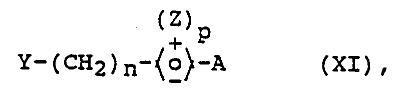

Worin A, Y, Z, n und p die oben angegebenen Bedeutungen haben.

Die Verbindungen der Formel (XI) können anschließend wie folgt umgesetzt werden:
**D1)**- falls X im gewünschten Produkt der Formel (II) ein Rest der Formel -COOH sein soll - Umsetzung von Verbindungen der Formel (XI), wobei A ein Rest der Bedeutung Q ist, mit Magnesium und anschließend mit CO₂,
**D2)**- falls X im gewünschten Produkt der Formel (II) ein Rest der Formel -CN sein soll - Umsetzung von Verbindungen der Formel (XI), wobei A ein Rest der Bedeutung Q ist, mit Cyaniden, vorzugsweise mit Kupfercyanid,
**D3)**- falls X im gewünschten Produkt der Formel (II) ein Rest der Formel -OH sein soll und der Rest A in Formel (XI) eine durch eine Schutzgruppe blockierte Hydroxylgruppe ist -Entfernung der Schutzgruppe auf an sich bekannte Weise,
**D4)**- falls X im gewünschten Produkt der Formel (II) ein Rest der Formel -CHO sein soll - Umsetzung von Verbindungen der Formel (XI), wobei A ein Rest der Bedeutung Q ist, mit Magnesium und dann mit N,N-Dimethylformamid und anschließender saurer Hydrolyse.

### Verfahren (3):

Das oben genannte Verfahren kann auch dadurch variiert werden, daß man - wenn A in den Formeln (VII), (VIII) und (X) eine durch eine Schutzgruppe blockierte Hydroxylgruppe ist - diese Schutzgruppe bereits nach Schritt B) von Verbindung der Formel (X) abspaltet.

### Verfahren (4):

Die Ausgangsverbindungen der Formel (V), für die m=1 bedeutet, also solche der Formel (XII) 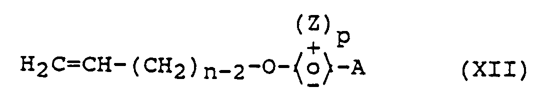
werden vorzugsweise hergestellt durch Umsetzung von Verbindungen der Formel (XIII) 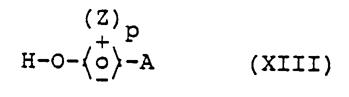
mit Verbindungen der Formel (XIV)

H₂C=CH-(CH₂)ₙ₋₂-Q (XIV),

wobei in den obigen Formeln (XIII) und (XIV) A, P, Q, Z, n und p die oben angegebenen Bedeutungen besitzen.

Vorzugsweise bedeutet Q in Formel (XIV) ein Bromatom. Die Umsetzung erfolgt in an sich bekannter Weise. Die entsprechende Reaktion ist u.a. in US-A-4 358 391 (ausgegeben am 9. November 1982, H. Finkelmann et al., Wacker-Chemie GmbH) beschrieben.

### Verfahren (5):

Verbindungen der Formel (II) können auch hergestellt werden durch
**A)** Umsetzung von Verbindungen der Formel (XVI) 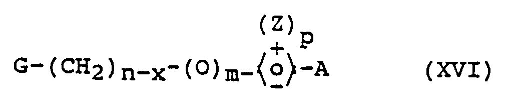 mit Verbindungen der Formel (XVII)

   Y-(CH₂)ₓ-E (XVII),

   wobei in den obigen Formeln (XVI) und (XVII) einer der Reste **E** oder **G** ein Rest der Formel -Mg-Q und der jeweils andere ein Rest der Bedeutung Q oder ein durch eine Schutzgruppe blockierte Hydroxylrest ist,
   - **x**: eine ganze Zahl von 0 bis n-1 bedeutet, mit der Maßgabe, daß, falls E die Bedeutung -Mg-Q hat und der Rest -(CH₂)ₓ-E in Formel (XVII) direkt an ein Siliciumatom gebunden ist, **x** mindestens den Wert 1 hat,
   und A, Y, Z, n, m und p die in Formel (II) bzw. in Formel (V) angegebenen Bedeutungen haben, und
**B)** Weiterverarbeitung der so entstandenen Verbindung der Formel (VI) gemäß Verfahren (1), zweite Stufe.

Alle vorstehend genannten Reaktionen mit magnesiumorganischen Verbindungen als Reaktionspartnern können, wie dem Fachmann hinreichend bekannt, stattdessen mit anderen metallorganischen Verbindungen, beispielsweise mit lithiumorganischen Verbindungen, durchgeführt werden.

### Verfahren (6) :

Verbindungen der Formel (II), für die X ein Rest der Formel -NR₂ bedeutet und m den Wert 1 hat, können hergestellt werden durch Umsetzung von Verbindungen der Formel (XVIII) 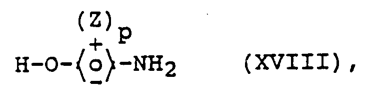
-nach blockieren der Aminofunktion durch eine Schutzgruppe-mit Verbindungen der Formel (XIX)

Y-(CH₂)ₙ-Σ (XIX),

worin Σ eine an sich bekannte gute Abgangsgruppe, vorzugsweise eine p-Toluolsulfonylgruppe ist
und in den obigen Formeln (XVIII) und (XIX) Y, Z, n und p die für Formel (II) angegebenen Bedeutungen haben,
und nachfolgender Abspaltung der die Aminogruppe blockierenden Schutzgruppe.

Schutzgruppen für die Aminofunktion sind hinreichend bekannt. Im vorliegenden Verfahren ist es bevorzugt, die Aminofunktion unter Bildung einer Schiff'schen Base zu blockieren. Dies erfolgt im allgemeinen durch Umsetzung mit einem entsprechenden Aldehyd. Im vorliegenden Fall ist als Aldehyd Benzaldehyd bevorzugt. Die Schutzgruppe läßt sich im sauren Milieu abspalten, beispielsweise in methanolischer Salzsäure.

### Verwendung

Die oben geschilderten Verbindungen und ähnliche, nämlich Verbindungen der Formel (XV) 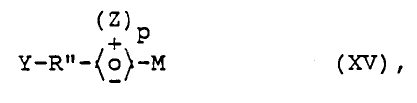
worin
- **M**: ein Halogenatom, einen Cyanorest, einen Rest der Formel -OH, -COOH oder -COCl bedeutet und
Y, Z, R˝ und p die in Anspruch 1 angegebenen Bedeutungen haben,
können als Ausgangsstoffe zur Herstellung von Verbindungen mit flüssigkristallinen Eigenschaften verwendet werden.

Sie können insbesondere als Ausgangsverbindungen für die in der deutschen Patentanmeldung P 39 20 509.6 (angemeldet am 22. Juni 1989, W. Haas et al., Consortium für elektrochemische Industrie GmbH) beschriebenen teilweise flüssigkristallinen silylierten Benzoesäureester eingesetzt werden.

Bevorzugte Halogenatome M sind Chlor- oder Bromatome. Bedeutet M ein Halogenatom, so werden die Verbindungen der Formel (XV) vorzugsweise zuerst nach oben geschilderter Weise mit Magnesium und anschließend mit CO₂ zu den entsprechenden Säuren umgesetzt. Die so entstandenen Säuren bzw. die Verbindungen der Formel (XV), für die M eine Gruppe der Formel -COOH bedeutet, werden vorzugsweise anschließend in an sich bekannter Weise zu den entsprechenden Säurehalogeniden umgesetzt. Die so entstandenen Säurehalogenide bzw. die Verbindungen der Formel (XV), für die M eine Gruppe der Formel - COCl bedeutet, werden mit einem Alkohol zu einem eine mesogene Gruppe enthaltendem Molekül umgesetzt. Entsprechend können Verbindungen der Formel (XV), für die M eine Gruppe der Formel -CN bedeutet, nach Verseifung zur entsprechenden Säure in an sich bekannter Weise zur Reaktion gebracht werden. Verbindungen der Formel (XV), für die M eine Hydroxylgruppe bedeutet, werden hingegen vorzugsweise mit entsprechend ausgewählten Säuren oder Säurehalogeniden zu den gewünschten, mesogene Gruppen enthaltenden Molekülen umgesetzt werden.

Verbindungen der Formel (XV), für die M einen Rest der Formel -CHO bedeutet, könnnen in an sich bekannter Weise mit Aminen, z.B. in 4-Stellung substituierten Anilinen, zu Schiff'schen Basen umgesetzt werden. Weiterhin sind aus den gleichen Verbindungen - in ebenfalls grundsätzlich bekannter Weise - durch Umsetzung mit Grignard-Verbindungen die entsprechenden Hydroxyalkylverbindungen darstellbar. Letztere können durch Wasserabspaltung zu Stilbenen reagieren, welche wiederum nach Hydrierung zu substituierten Ethylenverbindungen führen. In analoger Weise lassen sich auch Verbindungen der Formel (XV), für die M einen Rest der Formel -NH₂ bedeutet, mit Aldehyden, beispielsweise mit in 4-Stellung substituierten Benzaldehyden, umsetzen. Schiff'sche Basen und und Stilbene sind als mesogene Gruppen bzw. Strukturmerkmale für mesogene Gruppen in der eingangs zitierten Literatur hinlänglich beschrieben.

Mesogenen Gruppen sind Gruppen, die in einem Molekül flüssigkristalline Eigenschaften hervorrufen können. Mesogene Gruppen und entsprechende flüssigkristalline Verbindungen sind u.a. durch B. D. Demus, H. Demus und H. Zaschke (Flüssige Kristalle in Tabellen, 1974; D. Demus und H. Zaschke, Flüssige Kristalle in Tabellen II, 1984, VEB-Verlag Leipzig) bekannt. In US-A-4 358 391 (H. Finkelmann et al., Wacker-Chemie GmbH) sind flüssigkristalline Polymere mit Organopolysiloxanrückgrat und mesogenen Seitengruppen beschrieben.

Es ist bevorzugt, daß in den oben genannten Formeln (I), (II), (V), (VI), (VII), (VIII), (X), (XI), (XII), (XIII), (XV) und (XVI) **p** jeweils den Wert 0 besitzt.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C .

### Beispiel 1:

### A. Herstellung von Verbindungen der Formel (X):

Eine Lösung von 294 g (2 Mol) 1.4-Dichlorbenzol in 500 ml wasserfreiem Tetrahydrofuran wurde unter Stickstoff bei 80° C zu einer gerührten Suspension von 48,6 g (2,0 Mol) Magnesiumspänen innerhalb von 110 min zugetropft. Anschließend wurde noch 2 Stunden auf 80-84° C erhitzt, dann vom überschüssigen Magnesium dekantiert und diese Lösung der Grignardverbindung bei 80° C innerhalb von 30 min zu einer gerührten Lösung von 194 g (1,8 Mol) 6-Brom-1-hexen (käuflich bei Fluka GmbH, D-7910 Neu-Ulm) in 200 ml Tetrahydrofuran zugetropft. Danach wurde noch 4 Stunden bei 80° gerührt und das Gemisch auf Eis gegossen. Nach Ansäuren mit Salzsäure wurde dreimal mit einem 1 : 1-Gemisch Diethylether-/Methyltert.butylether extrahiert, die Etherfraktionen mit Aktivkohle durchgerührt und über Natriumsulfat getrocknet. Nach Einengen des Filtrats wurde der Rückstand bei vermindertem Druck fraktioniert. Bei einem Druck von 13 hPa und einer Temperatur von 116-118° C wurden 156 g (entsprechend 40 % Ausbeute der Theorie) an 4-(5-Hexenyl)-1-chlorbenzol erhaltene. Auf gleiche Weise ist auch 4-(4-Pentenyl)-1-chlorbenzol (Kp. bei 13 hPa 102-105° C), 4-(11-Dodecenyl)-1-chlorbenzol (Kp. bei 0,2 hPa 147-150 °) und 4-(8-Nonenyl)-1-chlorbenzol (Kp. bei 0.3 hPa 87° C) herstellbar.

### B. Herstellung von Verbindungen der Formel (XI):

15,9 g (0,082 Mol) 4-(5-Hexenyl)-1-chlorbenzol wurden in 10 ml Toluol gelöst, 0,8 ml einer 1 %igen Lösung von Dicyclopentadienylplatindichlorid in Dichlormethan (entsprechend 100 ppm Pt) zugefügt und das Gemisch in einen 100 ml-Laborautoklaven gegeben. Dazu wurden 10 g (0,147 Mol) Trimethylsilan in kondensiertem Zustand gegeben, der Autoklav verschlossen und 5 MPa Stickstoff aufgepreßt. Das Gemisch wurde 90 min auf 70-80° C erwärmt (8 MPa, Innenrührung). Danach wurde abgekühlt, das Lösungsmittel abgezogen und der Rest fraktioniert. Bei 0,1 hPa und einem Siedebereich von 107-112° C wurden 17,6 g 4-(1-Trimethylsilylhexyl)-1-chlorbenzol, entsprechend 77,1 % der Theorie, erhalten. In ähnlicher Weise sind folgende Derivate zu erhalten:
4-(1-Trimethylsilylpropyl)-1-chlorbenzol Kp. bei 15 hPa 115-118° C.
4-(1-Dimethylethylsilylbutyl)-1-brombenzol Kp. bei 0.05 hPa 110-112° C.
4-(1-Trimethylsilylpentyl)-1-chlorbenzol Kp. bei 2 hPa 148-149° C.
4-[1-(Pentamethyldisiloxanyl)ethyl]-1-brombenzol Kp. bei 0,1 hPa 128° C.
4-(1-Trimethylsilyldecyl)-1-chlorbenzol; Kp bei 0,03 hPa 127° C.
4-(4,4-Dimethyl-1-trimethylsilyl-4-silaoctyl)-1-chlorbenzol; Kp bei 0,2 hPa 126-128° C. (= Me₃Si-CH₂-CH₂-CH₂-SiMe₂-(CH₂)₄-C₆H₄-Cl).
4-[1-(Butyldimethylsilyl)butyl]-1-chlorbenzol; Kp. bei 1hPa 135° C.
4-[(1-Trimethylsilyl)nonyl]-1-chlorbenzol; Kp. bei 0,03 h Pa 120° C.

### C. Herstellung der erfindungsgemäßen Verbindungen der Formel (I) mit X = -COOH

17,6 g (0,063 Mol) 4-(1-Trimethylsilylhexyl)-1-chlorbenzol wurden in 17 ml Tetrahydrofuran gelöst. In einem Kolben wurden 2 g (0,082 Mol) Magnesium vorgelegt, 5 ml des genannten Gemisches zugefügt und auf 60° C erwärmt. Danach wurden 3 Tropfen Ethyljodid als Starter zugefügt und das Gemisch auf Rückfluß erhitzt, bis eine Innentemperatur von 86° C erreicht war. Dazu wurde der Rest des Gemisches so zugetropft, daß die Innentemperatur nicht über 93° C stieg. Gegen Ende der Reaktion wurde die Temperatur durch Zutropfen von 8 ml reinem Tetrahydrofuran stabilisiert. Nach 10 Stunden Reaktionszeit wurde abgekühlt, vom überschüssigen Magnesium dekantiert und die Lösung der Grignardverbindung bei 0-10° C zu Tetrahydrofuran gegeben, das mit Kohlendioxid gesättigt war. Nach 40 min wurde kurz aufgekocht, das Gemisch auf Eis gegossen und angesäuert. Nach Trennung der Phasen wurde 4 mal mit Methyl-tert.-butylether extrahiert, dann die Etherphasen gesammelt, getrocknet und eingeengt. Der Rückstand wurde aus Heptan umkristallisiert und ergab 12 g 4-(1-Trimethylsilylhexyl)-benzoesäure vom Schmelzpunkt 131.5° C. Erhalten wurden 12 g der Säure, entsprechend einer Ausbeute von 68.5 % der Theorie.

In ähnlicher Weise sind erhältlich:
4-(1-Trimethylsilylpropyl)-benzoesäure Fp. 119° C
4-(1-Trimethylsilylbutyl)benzoesäure Fp. 178-179,5° C
4-(1-Dimethylethylsilylpropyl)benzoesäure Fp. 131-153° C
4-[1-(Pentamethyldisiloxanyl)ethyl]benzoesäure Fp. 134-135°C
4-(1-Trimethylsilylpentyl)benzoesäure, Fp. 105° C
4-(1-Trimethylsilyldecyl)benzoesäure, Fp. 104° C
4-(1-Trimethylsilylhexyl)benzoesäure, Fp. 99 °C
4-(1-Trimethylsilylheptyl)benzoesäure, Fp. 132 °C
4-(1-Trimethylsilyloctyl)benzoesäure, Fp. 116 °C
4-(1-Trimethylsilylnonyl)benzoesäure, Fp. 79-80 °C
4-(1-n-Butyldimethylsilylbutyl)benzoesäure, Fp. 91 °C

Durch Verwendung anderer Silane bzw. Siloxane bei der Hydrosilylierung nach obigem Muster sind in gleicher Weise herstellbar:
4-(1-Dimethyl-n-hexylsilylpentyl)benzoesäure
4-[1-(Pentamethyldisiloxanyl)propyl]benzoesäure
4-[1-(Pentamethyldisiloxanyl)butyl]benzoesäure
4-[1-(Pentamethyldisiloxanyl)hexyl]benzoesäure
4-[1-(Pentamethyldisiloxanyl)octyl]benzoesäure
4-[1-(Heptamethyltrisiloxanyl)propyl]benzoesäure
4-[1- Heptamethylcyclotetrasiloxanyl)propyl]benzoesäure
4-[1-(Heptamethylcyclotetrasiloxanyl)butyl]benzoesäure

### Beispiel 2: Herstellung der erfindungsgemäßen Verbindungen der Formel (I) mit X = -OH

Nach Y. P. Yardley und H. Fletcher, Synthesis 1976, S. 244, wurde aus Formaldehyddimethylacetal und 4-Bromphenol 4-Methoxymethoxy-1-brombenzol hergestellt. Der Siedepunkt dieses Derivats bei 0,1 hPa liegt bei 54-56° C, die Ausbeute beträgt 49 % der Theorie.
4,6 g (0,19 Mol) Magnesiumspäne wurden unter Stickstoff mit absolutem Tetrahydrofuran befeuchtet, auf 60° C erwärmt und mit einigen Tropfen 4-Methoxymethoxy-1-brombenzol sowie einigen Tropfen Ethyljodid als Starter versetzt. Nach dem Anspringen der Reaktion wurde die Restmenge von insgesamt 35 g (0,16 Mol) der Bromverbindung, gelöst in 150 ml Tetrahydrofuran, so zudosiert, daß das Gemisch am Sieden blieb und anschließend wurde weitere 2,5 Stunden unter Rückfluß erhitzt. Danach wurde eine katalytische Menge einer Lösung von Dilithiumtetrachlorocuprat (mit einem 5 %-Anteil an Dilithiumtetrabromcuprat) sowie 16,2 ml (0,16 Mol) 4-Brom-1-buten, gelöst in 200 ml THF zugegeben. Das Gemisch wurde 16 Stunden auf Rückfluß erhitzt, dann abgekühlt und auf Eis gegossen. Nach Ansäuern und Phasentrennung wurde die wäßrige Phase 2 x mit 400 ml Methyl-tert.-Butylether extrahiert. Die organischen Phasen wurden getrocknet und eingeengt. Der Rückstand wurde bei vermindertem Druck fraktioniert. Bei einer Siedetemperatur von 118°-120° C und einem Druck von 15 hPa wurden 16,5 g (entsprechend 53,6 % der Theorie) an 4-(Methoxy-methoxy)-1-(3-butenyl)benzol erhalten.
Durch Erwärmen diese Derivats mit 2n Essigsäure auf 95 - 100° C (40 Stunden) wurde das 4-(3-Butenyl)phenol freigesetzt. Erhalten wurden bei einem Druck von 16 hPa 130-140° C 20,8 g 4-(3-Butenyl)phenol (42,1 % der Theorie).

Anstelle der beschriebenen Spaltung kann auch gleich die Silylierung bei noch vorhanderer Schutzgruppe durchgeführt werden. 19,2 g (0,1 Mol) 4-(Methoxymethoxy)-1-(3-butenyl)benzol wurden in 70 ml Toluol gelöst, 13,8 g (0,1 Mol) Pentamethyldisiloxan und 100 ppm Platin (in Form einer 0,5 %-Lösung von Dicylclopentadienplatindichlorid in Dichloromethan) zugefügt und das Gemisch 60 min auf 90° C erhitzt. Nach Abkühlung wurden das Lösungsmittel abgedampft und der Rückstand 40 Stunden mit überschüssiger 2n Essigsäure gespalten. Nach erneutem Einengen im Vakuum wurde der Rückstand im Vakuum destilliert. Bei einem Druck von 0,2 hPa und einem Siedebereich von 113-115° C wurden 14,2 g 4-[(1-Pentamethyldisiloxyanyl)butyl]phenol (entsprechend einer Ausbeute von 73,8 % der Theorie) erhalten. ¹H-NMR-Spektrum (in CDCl₃): 0,1 ppm (mehrere s, 5 CH₃ an beiden Si-Atomen), 0,5 - 0,6 ppm (m, -SiMe₂-CH₂), 1,3 - 1,5 ppm (m, -SiMe₂-CH₂-CH₂), 1,5 - 1,7 ppm (q, J=6,5 Hz, C₆H₄-CH₂-CH₂), 2,6 ppm (t, J=6,5 Hz, C₆H₄-CH₂), 4,9 ppm (s, C₆H₄OH) und 6,7 - 7,1 ppm (m, 4 aromat. H) im Verhältmis 15:2:2:2:2:1:4.
In gleicher Weise ist auch 4-(1-Trimethylsilylbutyl)phenol (Kp. bei 0,3 hPa 100° C) herstellbar.

### Beispiel 3:

A. 20,0 g (95 mMol) 4-(3-Butenyl)-1-brombenzol (beispielsweise herstellbar nach P. E. Peterson et al., J.Org.Chem. 33, 972 (1968)) wurden in 40 ml Toluol gelöst, 2 ml einer Platinkatalysatorlösung (0,5 % Lösung von Dicyclopentadienplatindichlorid in Dichlormethan) zugefügt und das Gemisch zu einer Lösung von 16 g (0,18 Mol) käuflichem Dimethylethylsilan in 20 ml Toluol unter Rühren zugetropft. Das Gemisch wurde 3 Stunden bei 50 - 70° C gerührt, dann abgekühlt und das Lösungsmittel abdestilliert. Der Rückstand wurde bei vermindertem Druck fraktioniert. Bei einem Druck von 0,05 hPa und einer Temperatur von 110 - 112° C wurden 19,4 g 4-[4-(Dimethylethylsilyl)butyl]-1-brombenzol (67,9 % Ausbeute,) erhalten. Ein Gemisch aus 18 g (0,06 Mol) dieses Derivats, 6,3 g (0,07 Mol) CuCN und 10 ml Dimethylformamid wurden 8 Stunden auf 160° C erhitzt. Das noch 80° C heiße Gemisch wurde auf ein Gemisch aus 30 g Eisen(III)-chlorid, 7.5 ml konzentrierter Salzsäure und 90 ml Wasser gegossen und die Gesamtmischung bei 70° C 75 min gerührt. Danach wurde mit tert.-Butylmethylether extrahiert, der Extrakt gewaschen, getrocknet, eingeengt und der Rückstand fraktioniert. Bei 0,02 hPa und 114 - 116° C wurden 9,9 g 4-[4-(Dimethylethylsilyl)butyl)benzonitril erhalten (66,6 % Ausbeute).
B. 9,9 g (0,04 Mol) dieses Nitrils wurden mit 7,5 g KOH, 20 ml Wasser und 20 ml Ethanol 4,5 Stunden auf Rückfluß erhitzt. Anschließend wurde eingeengt, angesäuert und abfiltriert. Nach Trocknung wurden 8,8 g 4-[4-(Dimethylethylsilyl)butyl]benzoesäure (83 % Ausbeute) erhalten. Der Schmelzpunkt der Säure liegt bei 151 - 153° C.

### Beispiel 4:

A. 12,3 g (0,1 Mol) käufliches Chlormethyltrimethylsilan wurden in 100 ml Diethylether gelöst und 2 ml dieser Lösung unter Schutzgas zu einem Gemisch aus 3 g Magnesiumspänen und einem Tropfen Ethyljodid gegeben. Nachdem die Reaktion durch Erwärmen in Gang gekommen war, wurde der Rest des Silan/Ethergemisches innerhalb einer Stunde unter Rühren bei 20° C zugetropft. Nach beendeter Zugabe wurde noch 30 min auf Rückfluß erhitzt, dann abgekühlt und vom überschüssigen Magnesium dekantiert. Die erhaltene Lösung wurde innerhalb 30 min unter Rühren bei 20 - 30° C zu einer Lösung von 22,7 g (0,1 Mol) Toluolsulfonsäure-2-(4-chlorphenyl)ethylester (aus käuflichem 2-(4-Chlorphenyl)ethanol durch bekannte Umsetzung mit Toluolsulfonsäurechlorid erhältlich) in 100 ml Tetrahydrofuarn, zugetropft. Nach beendeter Zugabe wurden 100 ml Lösungsmittelgemisch abdestilliert und durch 50 ml Tetrahydrofuran ersetzt. Das Gemisch wurde 60 min auf 60° C Innentemperatur erhitzt, wobei Magnesiumtosylat ausfiel. Nach dem Erkalten wurde das Gemisch auf Eis gegossen, mit wenig Salzsäure angesäuert und die wäßrige Phase zweimal mit tert.-Butylmethylether extrahiert. Die gesammelten organischen Phasen wurden mit NaCl-Lösung gewaschen, getrocknet und eingeengt. Durch fraktionierte Destillation des Rückstands bei 16 hPa und 115 - 118° C wurden 17,1 g (75,4 % Ausbeute) an 1-Chlor-4-(1-trimethylsilylpropyl)benzol erhalten.
B. In einem Kolben wurden 2 g Magnesium vorgelegt und bei 40° C mit 7 ml eines 1 : 1-Gemisches des gemäß A. herstellbaren Silans und Tetrahydrofuran zum Starten der Reaktion zugegeben. Nach Erreichen einer Innentemperatur von 75° C wurde der Rest des Silan/THF-Gemisches (entsprechend 14 g des Silans) ohne äußere Heizung in 30 min zugetropft. Anschließend wurde 1 Stunde auf Rückfluß erhitzt, dann abgekühlt und vom überschüssigen Magnesium filtriert.
   Diese Grignardlösung wurde bei 0-10° C zu Tetrahydrofuran gegeben, das mit Kohlendioxid gesättigt war. Durch das Gemisch wurde noch 40 min Kohlendioxid geleitet, dann kurz aufgekocht und das Gemisch auf Eis gegossen. Nach Ansäuern und Phasentrennung wurde mit tert. Butylmethylether extrahiert und die organischen Phasen gewaschen, getrocknet und eingeengt. Der Rückstand wurde aus Heptan umkristallisiert und ergab 11.4 g 4-(1-Trimethylsilylbutyl)benzoesäure (64.6 % Ausbeute) vom Schmelzpunkt 178-179,5° C.

### Beispiel 5:

In gleicher Weise wie in Beispiel 1 beschrieben, wurde aus 58,8 g (0,4 Mol) 1.4-Dichlorbenzol eine Grignardlösung in einem Gemisch aus 450 ml Toluol und 40 ml Tetrahydrofuran hergestellt. In diese Lösung wurde eine Lösung von 146.4 (0,6 Mol) käufliches 1.6-Dibromhexan in 100 ml Toluol sowie eine katalytische Menge von Dilithiumtetrachlorocuprat zugegeben. Das gesamte Gemisch wurde 7 Stunden auf Rückfluß erhitzt. Da nach wurde von Niederschlag abfiltriert, angesäuert und die Phasen getrennt. Nach Waschen, Trocknen und Einengen der organischen Phase wurde der Rückstand fraktioniert. Bei einem Druck von 0,2 hPa und 106-109° C wurden 50 g 1-(6-Bromhexyl)-4-chlorbenzol (45 % Ausbeute) erhalten.

In einem Kolben wurden 2 g (82 mMol) Magnesium vorgelegt und mit Tetrahydrofuran befeuchtet. Mit 5 Tropfen 1-(6-Bromhexyl)-4-chlorbenzol wurde eine Grignardreaktion gestartet. Der Rest von insgesamt 17 g der Halogenverbindung (61 mMol), gelöst in 50 ml Tetrahydrofuran, wurde bei 50 - 60° C zugetropft. Nach beendeter Zugabe wurde noch 2,5 Stunden bei dieser Temperatur gehalten und dann bei 20-40° C eine Lösung von 12 g (110 mMol) Trimethylchlorsilan und einer katalytischen Menge Dilithiumtetrachlorocuprat in 40 ml Tetrahydrofuran zugetropft. Die Mischung wurde 1 Stunde bei 60° C gerührt, über Nacht stehengelassen und mit 200 ml tert. Butylmethylether verdünnt. Danach wurde mit 2n Schwefelsäure angesäuert, nach Phasentrennung die organische Phase gewaschen und getrocknet. Der eingeengte Rückstand wurde fraktioniert. Bei einem Druck von 0,2 hPa und 88-90° C wurde 6,4 g 1-Chlor-4-(1-trimethylsilylhexyl)benzol (38,6 % Ausbeute) erhalten.

### Beispiel 6:

4-(3-Butenyl)benzoesäure wurde wie in Beispiel 3 hergestellt und mit überschüssigem Chlortrimethylsilan zu 4-(3-Butenyl)benzoesäure-trimethylsilylester (Kp. bei 0,1 hPa 100-102° C) umgesetzt. 20,0 g (80,5 mMol) dieses Esters wurden in 60 ml Toluol gelöst und zusammen mit 1 ml einer 0,5 %-Lösung von Dicyclopentadienylplatindichlorid in Dichlormethan und 22,8 g (80,5 mMol) 1,3,3,5,5,7,7-Heptamethyl-cyclotetrasiloxan 4 Stunden bei 60-80° C gehalten. Danach wurde mit überschüssigem Methanol/Wasser der Ester verseift, das Methanol abgezogen und die Säure aus dem restlichen Wasser gefällt. Durch Aufnehmen mit Petrolbenzin, Aufkochen mit Aktivkohle, Filtrieren und erneutem Ausfüllen wurden 26,5 g 4-[1-(Heptamethylcyclotetrasiloxanyl)butyl]benzoesäure (75,3 % Ausbeute) vom Schmelzpunkt 72-78° C erhalten.

### Beispiel 7:

In 25 ml Toluol wurden 6,21 g (23.5 mmol)4-(5-Hexenyloxy)(1-trimethylsilyloxy)benzol, 3,48 g (23.5 mmol) Pentamethyldisiloxan und 694 mg (17.7 »mol Pt) 0.5 %ige Dicyclopentadienylplatindichloridlösung (Dichlormethan) 7 h unter Rückfluß erhitzt. Nach vollständiger Hydrosilylierung wurde das Toluol am Rotationsverdampfer unter Vakuum abdestilliert. Das Rohprodukt wurde zur Reinigung über Kieselgel chromatographiert. Erneute Chromatographie mit Petrolether/Essigester-Mischungen auf Kieselgel an einem Chromatotron der Firma Harrison Research lieferte 94 %iges 4-(1-Pentamethyldisiloxylhexyloxy)phenol als hellgelbe Flüssigkeit.

Analog wurde dargestellt:
4-(1-Trimethylsilylhexyloxy)phenol, 99 %ig, hellgelbe Flüssigkeit.

### Beispiel 8

Aus 3,5 g (0,24 Mol) Magnesium und 31,6 g (0,13 Mol) 4-(1-Trimethylsilylbutyl)-1-chlorbenzol wurde wie in Beispiel 1-C eine Grignardverbindung hergestellt und vom überschüssigen Magnesium abdekantiert. Die Lösung wurde bei 5 - 10 °C unter Rühren zu einer Lösung von 13,2 ml Dimethylformamid in 200 ml Tetrahydrofuran in 30 min. zugetropft und das Gemisch eine Stunde weitergerührt. Anschließend wurde auf Eis gegossen und mit Salzsäure angesäuert. Die organischen Anteile wurden mit Methyl-tert.butylether extrahiert und der Extrakt gewaschen, getrocknet und eingeengt. Durch Fraktionierung des Rückstands wurden bei 102 - 103 °C und 0,04 hPa 19,1 g (62,1 % d. Th.) an 4-(1-Trimethylsilylbutyl)-benzaldehyd erhalten.

### Beispiel 9

Zu einem Gemisch von 27,3 g (0,25 Mol) 4-Aminophenol, 21,5 ml Salzsäure (36 %ig) und 300 ml Wasser wurden unter Rühren bei 40 - 60 °C 26,5 g (0,25 Mol) Benzaldehyd zugetropft. Die entstandene gelbe Suspension wurde mit NaOH auf pH 5-6 gebracht und dieses Gemisch 30 min. auf 95 °C erhitzt. Danach wurde abgekühlt, die Kristalle abfiltriert, getrocknet und aus Methanol umkristallisiert.

19,7 g (0,1 Mol) dieses Derivats wurden in Methanol gelöst, eine Lösung von 5,4 g Natriummethylat in Methanol unter Rühren zugetropft und dazu bei 20 °C eine Lösung von 29,7 g (0,1 Mol) Toluolsulfonsäure-(6-trimethylsilylhexyl-1)ester zugetropft. Das Gemisch wurde 3 Tage auf Rückfluß erhitzt, dann abgekühlt und das entstandene Natriumtosylat entfernt. Nach Abziehen des Methanols wurde mit Acetonitril aufgenommen, nochmals 2 Std. auf Rückfluß erhitzt, erneut abgekühlt und das restliche Natriumtosylat abgetrennt. Nach Abdestillieren des Lösungsmittels wurde mit Wasser/tert.Butylmethylether ausgeschüttelt. Nach Phasentrennung, Waschen, Trocknen und Einengen wurden 24,4 g (68,8 % d. Th.) an N-Benzyliden-4-(1-trimethylsilylhexyloxy)anilin erhalten.

Durch Spaltung dieses Derivats mit Salzsäure in Methanol, Abtrennen der organischen Phasen und Ausschütteln des basisch gemachten Rests wurde das 4-(1-Trimethylsilylhexyloxy)anilin freigesetzt.

Toluolsulfonsäure-(1-Trimethylsilylhexyl)ester wurde folgendermaßen erhalten: Käufliches 5-Hexenol-1 wurde mit Toluol als Lösungsmittel mit Trimethylsilylchlorid/Triethylamin in den (5-Hexenyl)-trimethylsilylether überführt (Siedepunkt bei 78 °C und 32 hPa Druck). Diese Verbindung wurde in einem Laborautoklaven mit einer molaren Menge käuflichen Trimethylsilans und einer katalytischen Menge von Dicyclopentadienylplatindichlorid, wie in Beispiel 7 beschrieben, an der Doppelbindung silyliert. Der Siedepunkt des erhaltenen (1-Trimethylsilylhexyl)-trimethylsilylethers bei 2 hPa Druck betrug 73 - 74°C. Durch Abspaltung der Trimethylsilyl-Schutzgruppe mit Ethanol/NaOH wurde 1-Trimethylsilylhexanol freigesetzt, das in üblicher Weise mit Tosylchlorid in den gesuchten Ester umgewandelt wurde.

### 6. Beispiel 10 (zusätzliches Beispiel für 2-kern-Phenol)

### Beispiel 10

50 g (0,2 Mol) käufliches 4-Brom-4′-hydroxybiphenyl (TCI Chemicals/G. Karl GmbH, 6222 Geisenheim) wurden in bekannter Weise mit 2H-3,4-Dihydropyran zu 4′-Brombiphenylyltetrahydropyranylether umgesetzt. 33,3 g (0,1 Mol) dieser Verbindung wurden in 170 ml trockenem Tetrahydrofuran gelöst, 5 ml dieser Lösung zu 29,2 g (0,12 Mol) Magnesiumspänen gegeben und durch Zugabe von etwas Jod eine Grignardreaktion gestartet. Danach wurde der Rest der Lösung bei 50 - 60 °C unter Rühren zugetropft, 3 Std. auf Rückfluß erhitzt, abgekühlt und dekantiert.

Zu einer Lösung von 32,8 g (0,1 Mol) Toluolsulfonsäure(6-trimethylsilylhexyl-1)ester (Herstellung ist in Beispiel 9 beschrieben) in 150 ml Tetrahydrofuran wurde eine katalytische Menge von Li₂CuCl₄/Li₂CuBr₄ (1:1) gegeben und unter Rühren die oben genannte Lösung der Grignardverbindung zugetropft. Das Gemisch wurde 6 Std. auf Rückfluß erhitzt, dann abgekühlt und der Niederschlag abgetrennt. Nach Hydrolyse, Reinigung und Trocknung wurde 4-Hydroxy-4′-(6-trimethylsilylhexyl-1)biphenyl erhalten.
¹H-NMR (in CDCl₃): 0,0 ppm (s, Me₃Si), 0,5 ppm (t, Me₃Si-CH₂), 1,3 ppm (m, 3CH₂), 1,6 ppm (t, -C₆H₄-CH₂-CH₂-) 3,7 ppm (t, -C₆H₄-CH₂), 5,6 ppm (s, HO-C₆H₄-), 6,8-7,5 ppm (m. Serie von Dubl., 8 aromat. H).

## Patentansprüche

1. Verbindungen der Formel 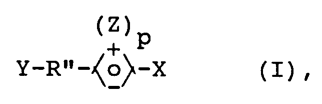 worin
**Y** einen Organosiliciumrest,
**X** einen Rest der Formel -COOH, -CN, -CHO oder -OH, wobei die letztgenannte Hydroxylgruppe durch eine Schutzgruppe blockiert sein kann,
**Z** gleiche oder verschiedene Halogenatome in 2-, 3-, 5- oder 6-Position zum Rest X,
**p** einen Wert von 0 bis 4 bedeuten und
**R''** einen gegebenenfalls substituierten Rest der Formel
-(O)_{q}-R''''ᵣ-(O)ₛ-,
worin
**q** und **s** jeweils unabhängig voneinander die Zahl 0 oder 1 bedeuten und
**r** einen Wert von 1 bis 3 einnimmt,
**R''''** ein zweiwertiger, gegebenenfalls substituierter Kohlenwasserstoffrest mit bis zu 20 Kohlenstoffatomen ist, insbesondere ein Alkylen-, Cycloalkylen-, Cycloalkenylen-, Arylen-, Alkarylen- oder Aralkylenrest, mit der Maßgabe, daß q, r, s und R'''' so gewählt sind, daß sich als Rest R'' ein zweiwertiger Rest ergibt, der den Rest Y mit dem Benzolkern über eine Kette von mindestens drei Atomen verbindet.

2. Verbindungen der Formel 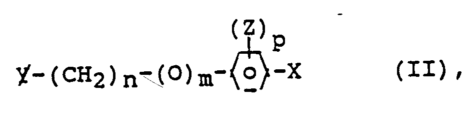 worin
**n** eine ganze Zahl im Wert von mindestens 2,
**m** eine ganze Zahl im Wert von 0 oder 1, wobei die Summe n + m mindestens 3 beträgt, bedeuten und X, Y, Z und p die in Anspruch 1 angegebene Bedeutung haben.

3. Verbindungen gemäß Anspruch 1 oder 2, wobei in den Formeln (I) bzw. (II)
**Y** ein linearer Silanyl- oder Siloxanylrest der Formel (III)
R-[SiR₂O]ₜ-SiR₂-(T)ᵥ- (III)
oder ein Cyclosiloxanylrest der Formel (IV)
[SiR₂O]ᵤSiRO-(T)ᵥ- (IV)
ist, wobei in den obigen Formeln (III) und (IV) unabhängig voneinander
**R** gleiche oder verschiedene, gegebenenfalls substituierte Kohlenwasserstoffreste mit 1 bis 18 Kohlenstoffatomen, speziell Fluoralkylgruppen, deren gegebenenfalls vorhandene Substituenten vorzugsweise Halogenatome, Cyanoreste, Mercapto- und Aminogruppen sind,
**t** eine ganze Zahl im Wert von mindestens 0,
**u** eine ganze Zahl im Wert von mindestens 2 , vorzugsweise höchstens 8,
**v** eine ganze Zahl im Wert von mindestens 0 , vorzugsweise mit einem Wert von höchstens 5, insbesondere von höchstens 1,
**T** ein Rest der Formel -R˝˝-SiR₂-, wobei R die oben unter den Formeln (III), (IV) angegebenen Bedeutungen besitzt und
**R''''** ein zweiwertiger, gegebenenfalls substituierter Kohlenwasserstoffrest mit bis zu 20 Kohlenstoffatomen ist, insbesondere ein Alkylen-, Cycloalkylen-, Cycloalkenylen-, Arylen-, Alkarylen- oder Aralkylenrest ist,
bedeuten.

4. Verfahren zur Herstellung von Verbindungen der Formel (II) gemäß Anspruch 2 durch
**A)** Umsetzung von Verbindungen der Formel (V) 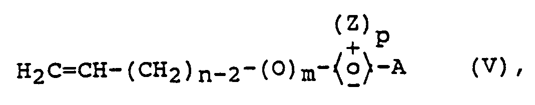 worin
**A** eine der Bedeutungen von Q hat oder eine gegebenenfalls durch eine Schutzgruppe blockierte Hydroxyl- oder Carboxylgruppe ist, wobei
**Q** ein Halogenatom, vorzugsweise ein Chlor- oder Bromatom ist,
mit Verbindungen der Formel **Y-H** in Gegenwart von Platinmetallen und/oder deren Verbindungen zu Verbindungen der Formel (VI) 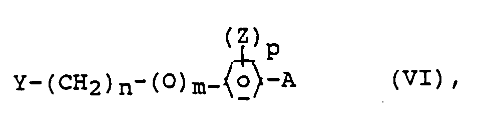 und
**B1)** - falls X im gewünschten Produkt der Formel (II) ein Rest der Formel -COOH sein soll - Umsetzung von Verbindungen der Formel (VI), wobei A ein Rest der Bedeutung Q ist, mit Magnesium und anschließend mit CO₂, oder
Umsetzung von Verbindungen der Formel (VI), wobei A eine mit einer Schutzgruppe blockierter Carboxylrest ist, unter Abspaltung der Schutzgruppe.
**B2)** - falls X im gewünschten Produkt der Formel (II) ein Rest der Formel -CN sein soll - Umsetzung von Verbindungen der Formel (VI), wobei A ein Rest der Bedeutung Q ist, mit Cyaniden, vorzugsweise mit Kupfercyanid,
**B3)** - falls X im gewünschten Produkt der Formel (II) ein Rest der Formel -OH sein soll und der Rest A in Formel (VI) eine durch eine Schutzgruppe blockierte Hydroxylgruppe ist -
Entfernung der Schutzgruppe auf an sich bekannte Weise,
**B4)** - falls X im gewünschten Produkt der Formel (II) ein Rest der Formel -CHO sein soll - Umsetzung von Verbindungen der Formel (VI), wobei A ein Rest der Bedeutung Q ist, mit Magnesium und dann mit N,N-Dimethylformamid und anschließender saurer Hydrolyse.

5. Verfahren zur Herstellung von Verbindungen der Formel (II) gemäß Anspruch 2, für die m=0 bedeutet, durch
**A)** Umsetzung von Verbindungen der Formel (VII) 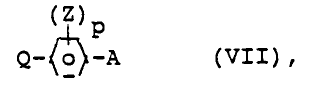 worin
**Q** ein Halogenatom, vorzugsweise ein Chlor- oder Bromatom und
**A** eine der Bedeutungen von Q hat oder eine durch eine Schutzgruppe blockierte Hydroxylgruppe
bedeuten und Z und p die in Anspruch 1 angegebene Bedeutung haben,
mit Magnesium zu Grignardverbindungen (VIII) 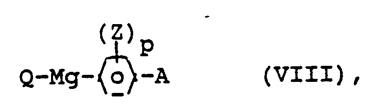
**B)** Umsetzung von Grignardverbindungen der Formel (VIII) mit Verbindungen der Formel (IX)
H₂C=CH-(CH₂)ₙ₋₂-Q (IX),
zu Verbindungen der Formel (X) 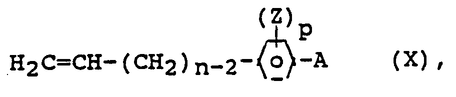
**C)** Umsetzung von Verbindungen der Formel (X) mit Verbindungen der Formel Y-H in Gegenwart von Platinmetallen und/oder deren Verbindungen zu Verbindungen der Formel (XI) 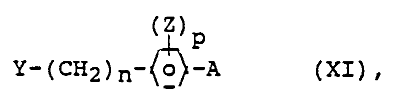 und
**D1)** - falls X im gewünschten Produkt der Formel (II) ein Rest der Formel -COOH sein soll - Umsetzung von Verbindungen der Formel (XI), wobei A ein Rest der Bedeutung Q ist, mit Magnesium und anschließend mit CO₂,
**D2)** - falls X im gewünschten Produkt der Formel (II) ein Rest der Formel -CN sein soll - Umsetzung von Verbindungen der Formel (XI), wobei A ein Rest der Bedeutung Q ist, mit Cyaniden, vorzugsweise mit Kupfercyanid,
**D3)** - falls X im gewünschten Produkt der Formel (II) ein Rest der Formel -OH sein soll und der Rest A in Formel (XI) eine durch eine Schutzgruppe blockierte Hydroxylgruppe ist -Entfernung der Schutzgruppe auf an sich bekannte Weise,
**D4)** - falls X im gewünschten Produkt der Formel (II) ein Rest der Formel -CHO sein soll - Umsetzung von Verbindungen der Formel (XI), wobei A ein Rest der Bedeutung Q ist, mit Magnesium und dann mit N,N-Dimethylformamid und anschließender saurer Hydrolyse.

6. Verfahren gemäß Anspruch 5, wobei A in den Formeln (VII), (VIII) und (X) eine durch eine Schutzgruppe blockierte Hydroxylgruppe ist, und diese Schutzgruppe bereits nach Schritt B) von Verbindung der Formel (X) abgespalten wird.

7. Verfahren gemäß Anspruch 4 zur Herstellung von Verbindungen der Formel (II) gemäß Anspruch 2, für die m=1 bedeutet, wobei die in Schritt A) eingesetzte Ausgangsverbindung der Formel (XII) 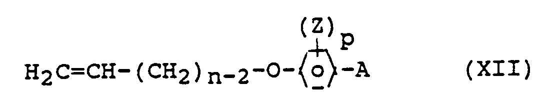 hergestellt wird durch Umsetzung von Verbindungen der Formel (XIII) 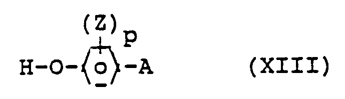 mit Verbindungen der Formel (XIV)
H₂C=CH-(CH₂)ₙ₋₂-Q (XIV),
wobei in den obigen Formeln (XIII) und (XIV) Z und p die in Anspruch 1, A die in Anspruch 4 und Q die in Anspruch 5 angegebene Bedeutung hat.

8. Verfahren zur Herstellung von Verbindungen der Formel (II) gemäß Anspruch 2 durch
**A)** Umsetzung von Verbindungen der Formel (XVI) 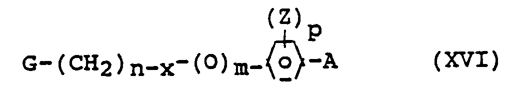 mit Verbindungen der Formel (XVII)
Y-(CH₂)ₓ-E (XVII),
wobei in den obigen Formeln (XVI) und (XVII) einer der Reste **E** oder **G** ein Rest der Formel -Mg-Q und der jeweils andere ein Rest der Bedeutung Q oder ein durch eine Schutzgruppe blockierte Hydroxylrest ist,
**x** eine ganze Zahl von 0 bis n-1 bedeutet, mit der Maßgabe, daß, falls E die Bedeutung -Mg-Q hat und der Rest -(CH₂)ₓ-E in Formel (XVII) direkt an ein Siliciumatom gebunden ist, **x** mindestens den Wert 1 hat,
und A, Y, Z, n, m und p die in Anspruch 1 bzw. in Anspruch 4 angegebenen Bedeutungen haben, und Q die in Anspruch 5 angegebene Bedeutung hat, und
**B)** Weiterverarbeitung der so entstandenen Verbindung der Formel (VI) gemäß Anspruch 4.

9. Verwendung von Verbindungen der Formel 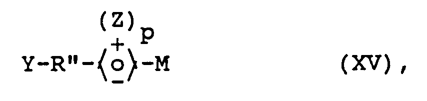 worin
**M** ein Halogenatom, einen Cyanorest, einen Rest der Formel -COCl, -COOH, -CHO, -NH₂ oder -OH bedeutet, wobei die letztgenannte Hydroxylgruppe durch eine Schutzgruppe blockiert sein kann, und
Y, Z, R˝ und p die in Anspruch 1 angegebenen Bedeutungen haben,
als Ausgangsstoffe zur Herstellung von Verbindungen mit flüssigkristallinen Eigenschaften.

10. Verbindungen gemäß Anspruch 1, 2 oder 3, Verfahren gemäß Anspruch 4, 5, 6, 7 oder 8 oder Verwendung gemäß Anspruch 9, wobei in den angegebenen Formeln (I), (II), (V), (VI), (VII), (VIII), (X), (XI), (XII), (XIII), (XV) und (XVI) **p** den Wert 0 besitzt.

## Claims

1. Compound of the formula 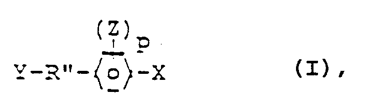 in which
**Y** denotes an organosilicon radical,
**X** denotes a radical of the formula -COOH, -CN, -CHO or -OH, it being possible for the last-mentioned hydroxyl group to be blocked by a protecting group,
**Z** denotes identical or different halogen atoms in the 2-, 3-, 5- or 6-position to the radical X,
**p** denotes a value of 0 to 4 and
**R''** is an optionally substituted radical of the formula
-(O)_{q}-R''''ᵣ-(O)ₛ-
in which
**q** and **s** each denote, independently of one another, the number o or 1 and
**r** adopts a value of 1 to 3,
**R''''** denotes a divalent, optionally substituted hydrocarbon radical having up to 20 carbon atoms, in particular an alkylene, cycloalkylene, cycloalkenylene, arylene, alkarylene or aralkylene radical.
with the proviso that q, r, s and R'''' are selected so that the radical R'' is a divalent radical which connects the radical Y to the benzene ring via a chain of at least three atoms

2. Compound of the formula 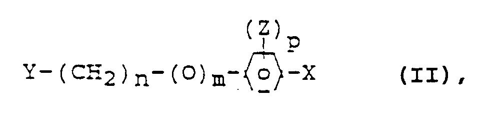 in which
**n** denotes an integer having a value of at least 2,
**m** denotes an integer having a value of 0 or 1, where the sum **n** + **m** is at least 3,
and X, Y, Z and p are as defined in Claim 1.

3. Compound according to Claim 1 or 2, where, in the formulae (I) or (II) respectively,
**Y** denotes a linear silanyl or siloxanyl radical of the formula (III)
R-[SiR₂O]ₜ-SiR₂-(T)ᵥ- (III)
or a cyclosiloxanyl radical of the formula (IV)
[SiR₂O]ᵤSiRO-(T)ᵥ- (IV)
where, in the above formulae (III) and (IV), independently of one another,
**R** denotes identical or different, optionally substituted hydrocarbon radicals having 1 to 18 carbon atoms, specifically fluoroalkyl groups, whose substituents, optionally present, are preferably halogen atoms, cyano radicals, mercapto groups or amino groups,
**t** denotes an integer having a value of at least 0,
**u** denotes an integer having a value of at least 2, preferably at most 8,
**v** denotes an integer having a value of at least 0, preferably having a maximum value of 5, in particular at most 1, and
**T** denotes a radical of the formula -R''''-SiR₂-, where R is as defined above under the formulae (III) and (IV), and
**R''''** denotes a divalent, optionally substituted hydrocarbon radical having up to 20 carbon atoms, in particular an alkylene, cycloalkylene, cycloalkenylene, arylene, alkarylene or aralkylene radical.

4. Process for the preparation of a compound of the formula (II) according to claim 2, by
**A)** reacting a compound of the formula (V) 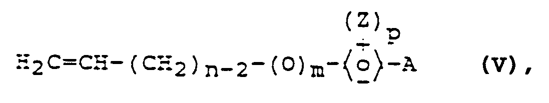 in which
**A** has one of the meanings of Q or is a hydroxyl or carboxyl group which is blocked by a protecting group, where
**Q** is a halogen atom, preferably a chlorine or bromine atom,
with a compound of the formula **Y-H** in the presence of platinum metals and/or compounds thereof to give a compound of the formula (VI) 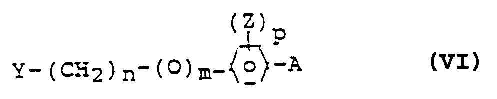 and
**B1)** - if X in the desired product of the formula (II) is to be a radical of the formula -COOH - reacting a compound of the formula (VI) in which A is a radical with the meaning Q, with magnesium and subsequently with CO₂, or
reacting a compound of the formula (VI) in which A is a carboxyl radical which is blocked by a protecting group, with removal of the protecting group,
**B2)** - if X in the desired product of the formula (II) is to be a radical of the formula -CN - reacting a compound of the formula (VI) in which A is a radical with the meaning Q, with a cyanide, preferably with copper cyanide,
**B3)** - if X in the desired product of the formula (II) is to be a radical of the formula -OH and the radical A in the formula (VI) is a hydroxyl group which is blocked by a protecting group
- removing the protecting group in a manner known per se,
**B4)** - if X in the desired product of the formula (II) is to be a radical of the formula -CHO - reacting a compound of the formula (VI) in which A is a radical with the meaning Q, with magnesium and then with N,N-dimethylformamide and subsequently subjecting the product to acid hydrolysis in a manner known per se.

5. Process for the preparation of a compound of the formula (II) according to Claim 2 for which m denotes 0, by
**A)** reacting a compound of the formula (VII) 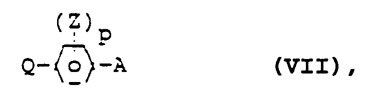 in which
**Q** denotes a halogen atom, preferably a chlorine or bromine atom, and
**A** has one of the meanings of Q or denotes a hydroxyl group which is blocked by a protecting group,
and Z and p are as defined in Claim 1,
with magnesium to give the Grignard compound (VIII) 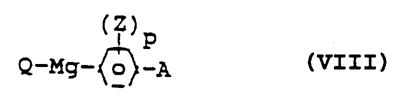
**B)** reacting the Grignard compound of the formula (VIII) with a compound of the formula (IX)
H₂C=CH-(CH₂)ₙ₋₂-Q (IX)
to give a compound of the formula (X) 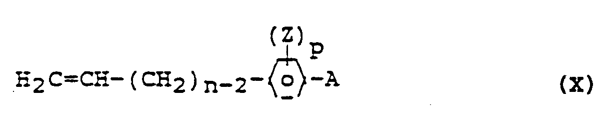
**C)** reacting a compound of the formula (X) with a compound of the formula **Y-H** in the presence of platinum metals and/or compound thereof to give a compound of the formula (XI) 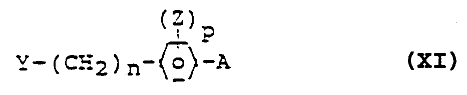 and
**D1)** - if X in the desired product of the formula (II) is to he a radical of the formula -COOH - reacting a compound of the formula (XI) in which A is a radical with the meaning Q, with magnesium and subsequently with CO₂,
**D2)** - if X in the desired product of the formula (II) is to be a radical of the formula -CN - reacting a compound of the formula (XI) in which A is a radical with the meaning Q, with cyanide, preferably with copper cyanide,
**D3)** - if X in the desired product of the formula (II) is to be a radical of the formula -OH and the radical A in the formula (XI) is a hydroxyl group which is blocked by a protecting group - removing the protecting group in a manner known per se, and
**D4)** - if X in the desired product of the formula (II) is to be a radical of the formula -CHO - reacting a compound of the formula (XI) in which A is a radical with the meaning Q, with magnesium and then with N,N-dimethylformamide and subsequently subjecting the product to acid hydrolysis.

6. Process according to Claim 5, where A in the formulae (VII), (VIII) and (X) is a hydroxyl group which is blocked by a protecting group, and this protecting group is removed from the compound of the formula (X) as early as after step B).

7. Process according to Claim 4 for the preparation of a compound of the formula (II) according to Claim 2 for which m denotes 1, in which the starting compound of the formula (XII) employed in step A) 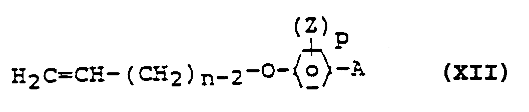 is prepared by reacting a compound of the formula (XIII) 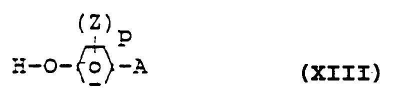 with a compound of the formula (XIV)
H₂C=CH-(CH₂)ₙ₋₂-Q (XIV)
where, in the above formulae (XIII) and (XIV), Z and p are as defined in Claim 1, A is as defined in Claim 4 and Q is as defined in Claim 5.

8. Process for the preparation of a compound of the formula (II) according to Claim 2, by
**A)** reacting a compound of the formula (XVI) 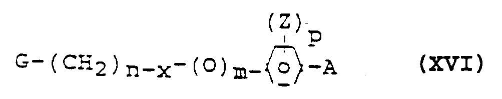 with a compound of the formula (XVII)
Y-(CH₂)ₓ-E (XVII)
where, in the above formulae (XVI) and (XVII), one of the radicals E or G is a radical of the formula -Mg-Q and the other radical is in each case a radical with the meaning Q or a hydroxyl radical which is blocked by a protecting group,
**x** denotes an integer from 0 to n-1, with the proviso that, if E denotes -Mg-Q and the radical -(CH₂)ₓ-E in the formula (XVII) is bonded directly to a silicon atom, x has a value of at least 1,
and A, Y, Z, n, m and p are as defined in Claim 1 or in Claim 4, and Q is as defined in Claim 5, and
**B)** further processing the resultant compound of the formula (VI) according to Claim 4.

9. Use of a compound of the formula 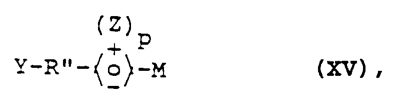 in which
**M** denotes a halogen atom, a cyano radical, a radical of the formula -COCl, -COOH, -CHO, -NH₂ or -OH, where the last-mentioned hydroxyl group may be blocked by a protecting group, and,
Y, Z, R'' and p are as defined in Claim 1,
as a starting material for the preparation of a compound having liquid-crystalline properties.

10. Compound according to Claim 1, 2 or 3, process according to Claim 4, 5, 6, 7 or 8 or use according to Claim 9, where p has the value 0 in the mentioned formulae (I), (II), (V), (VI), (VII), (VIII), (X), (XI), (XII), (XIII), (XV) and (XVI).

## Revendications

1. Composés de formule 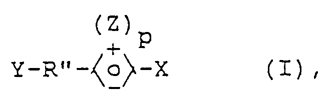 dans laquelle
Y est un résidu organique du silicium,
X est un radical de formule -COOH, -CN, -CHO ou -OH, ce dernier groupe hydroxyle pouvant être bloqué par un groupe protecteur,
Z représente des atomes d'halogène, identiques ou différents, sur la position 2, 3, 5 ou 6 du radical X,
p a une valeur de 0 à 4, et
R'' est un radical éventuellement substitué, de formule
-(O)_{q}-R''''ᵣ-(O)ₛ-,
où chacun des indices q et s, indépendamment l'un de l'autre, est le nombre 0 ou 1, et
r a une valeur de 1 à 3,
R'''' est un radical hydrocarboné divalent, éventuellement substitué, ayant jusqu'à 20 atomes de carbone, notamment un radical alkylène, cycloalkylène, cycloalcénylène, arylène, alcarylène ou aralkylène, du moment que q, r, s et R'''' sont choisis de façon à donner comme radical R'' un radical divalent, lequel relie le radical Y au noyau benzénique par l'intermédiaire d'une chaîne ayant au moins 3 atomes de carbone.

2. Composés de formule 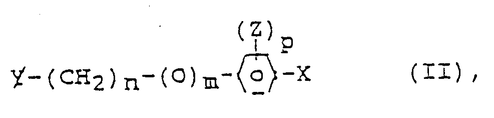 dans laquelle
n est un nombre entier valant au moins 2,
m est un nombre entier valant 0 ou 1, la somme n + m valant au moins 3, et X, Y, Z et p ont les significations données dans la formule (I).

3. Composés selon la revendication 1 ou 2, où, dans les formules (I) ou (II),
Y est un radical silanyle ou siloxanyle linéaire de formule (III)
R-[SiR₂O]t-SiR₂-(T)ᵥ- (III)
ou encore un radical cyclosiloxanyle de formule (IV)
[SiR₂O]ᵤSiRO-(T)ᵥ- (IV)
où, dans les formules (III) et (IV) ci-dessus, et indépendamment les uns des autres :
R représente des radicaux hydrocarbonés identiques ou différents, éventuellement substitués et ayant de 1 à 18 atomes de carbone, les substituants éventuellement présents étant de préférence des atomes d'halogène, des radicaux cyano ou des groupes mercapto et amino,
t est un nombre entier valant au moins 0,
u est un nombre entier valant au moins 2 et de préférence au plus 8,
v est un nombre entier valant au moins 0, de préférence au plus 5, notamment au plus 1,
T est un résidu de formule -R''''-SiR₂-, où R et R'''' ont les significations données ci-dessus, dans les formules (III), (IV) ou (I).

4. Procédé pour préparer des composés de formule (II) selon la revendication 2, consistant à :
A) à faire réagir des composés de formule (V) 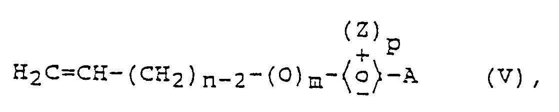 dans laquelle
A a l'une des significations de Q, ou est un groupe hydroxyle ou carboxyle protégé par un groupe protecteur, où
Q est un atome d'halogène, de préférence un atome de chlore ou de brome, et n, m, p et Z ont les significations données pour la formule (I)
avec des composés de formule Y-H, en présence de métaux du groupe du platine et/ou de leurs composés, pour donner des composés de formule (VI) 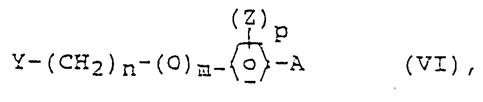 et
B1) si X, dans le produit recherché de formule (II), doit être un résidu de formule -COOH, à faire réagir des composés de formule (VI), où A est un radical ayant la signification de Q, avec du magnésium puis avec du CO₂, ou encore à faire réagir des composés de formule (VI), dans laquelle A est un radical carboxyle bloqué par un groupe protecteur, avec élimination du groupe protecteur ;
B2) si X, dans le produit recherché de formule (II) doit être un radical de formule -CN, à faire réagir des composés de formule (VI) dans laquelle A est un radical ayant la signification de Q, avec des cyanures, de préférence avec du cyanure de cuivre,
B3) si X, dans le produit recherché de formule (II), doit être un radical de formule -OH et que le radical A de la formule (VI) est un groupe hydroxyle bloqué par un groupe protecteur, à éliminer le groupe protecteur d'une manière connue en soi,
B4) si X, dans le produit recherché de formule (II), doit être un radical de formule -CHO, à faire réagir des composés de formule (VI), dans laquelle A est un radical ayant la signification de Q, avec du magnésium puis avec du N,N-diméthylformamide, puis à procéder à une hydrolyse acide.

5. Procédé pour préparer des composés de formule (II) selon la revendication 2, où m = 0, qui consiste :
A) à faire réagir des composés de formule (VII) 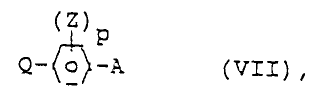 dans laquelle
Q est un atome d'halogène, de préférence un atome de chlore ou de brome, et
A a l'une des significations de Q ou est un groupe hydroxyle protégé par un groupe protecteur, et Z et p ont les significations données ci-dessus,
avec du magnésium pour donner des composés de Grignard (VIII) 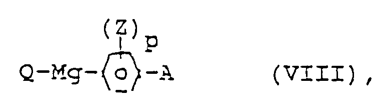
B) à faire réagir des composés de Grignard de formule (VIII) avec des composés de formule (IX)
H₂C=CH-(CH₂)ₙ₋₂-Q (IX)
pour donner des composés de formule (X) 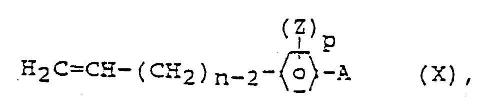
C) à faire réagir des composés de formule (X) avec des composés de formule Y-H en présence de métaux du groupe du platine et/ou de leurs composés, pour donner des composés de formule (XI) 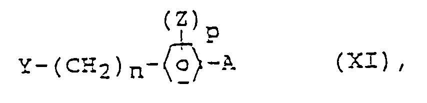 et
D1) si X, dans le produit recherché de formule (II), doit être un radical de formule -COOH, à faire réagir des composés de formule (XI) dans laquelle A est un radical ayant la signification de Q, avec du magnésium, puis avec du CO₂,
D2) si X, dans le produit recherché de formule (II), doit être un radical de formule -CN, à faire réagir des composés de formule (XI), dans laquelle A est un radical ayant la signification de Q, avec des cyanures, de préférence avec du cyanure de cuivre,
D3) si X, dans le produit recherché de formule (II) doit être un radical de formule -OH et que le radical A de la formule (XI) est un groupe hydroxyle bloqué par un groupe protecteur, à éliminer le groupe protecteur d'une manière connue en soi,
D4) si X, dans le produit recherché de formule (II), doit être un radical de formule -CHO, à faire réagir des composés de formule (XI) dans laquelle A est un radical ayant la signification de Q, avec du magnésium puis avec du N,N-diméthylformamide, puis à procéder à une hydrolyse acide.

6. Procédé selon la revendication 5, dans lequel A, dans les formules (VII), (VIII) et (X), est un groupe hydroxyle bloqué par un groupe protecteur, et ce groupe protecteur est dissocié du composé de formule (X) dès après l'étape B).

7. Procédé selon la revendication 4, pour préparer des composés de formule (II) selon la revendication 2, ou m = 1, où on prépare le composé de départ de formule (XII), utilisé dans l'étape A) 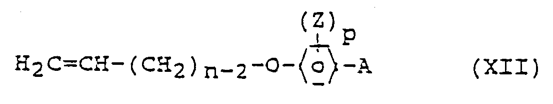 par réaction de composés de formule (XIII) 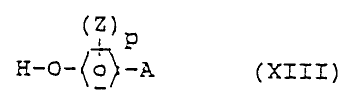 avec des composés de formule (XIV)
H₂C=CH-(CH₂)ₙ₋₂-Q (XIV)
où, dans les formules (XIII) et (XIV) ci-dessus, Z et p ont les significations données dans la revendication 1, A a les significations données dans la revendication 4 et Q a les significations données dans la revendication 5.

8. Procédé pour préparer des composés de formule (II) selon la revendication 2, qui consiste
A) à faire réagir des composés de formule (XVI) 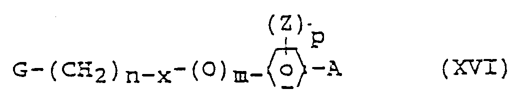 avec des composés de formule (XVII)
Y-(CH₂)ₓ-E (XVII),
où, dans les formules (XVI) et (XVII) ci-dessus, l'un des radicaux E ou G est un radical de formule -Mg-Q, et l'autre est un radical ayant la signification de Q ou encore un radical hydroxyle bloqué par un groupe protecteur,
x est un nombre entier de 0 à n-1, du moment que, quand E représente -Mg-Q et que le radical -(CH₂)ₓ-E de la formule (XVII) est directement lié à un atome de silicium, x vaut au moins 1, et que A, Y, Z, n, m et p ont les significations données dans la revendication 1 ou la revendication 4, et Q a les significations données dans la revendication 5, et
B) à procéder à un post-traitement du composé ainsi obtenu de formule (VI), selon la revendication 4.

9. Utilisation de composés de formule 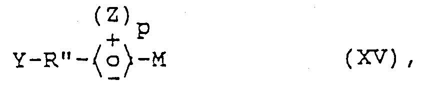 dans laquelle
M est un atome d'halogène, un radical cyano, un résidu de formule -COCl, -COOH, -CHO, -NH₂ ou -OH, ce dernier groupe hydroxyle pouvant être bloqué par un groupe protecteur, et
Y, Z, R'' et p ont les significations données dans la revendication 1,
comme composés de départ pour la préparation de composés ayant des propriétés mésomorphes.

10. Procédés selon les revendications 1, 2 ou 3, procédés selon les revendications 4, 5, 6, 7 ou 8, ou utilisation selon la revendication 9, où p vaut 0 dans les formules (I), (II), (V), (VI), (VII), (VIII), (X), (XI), (XII), (XIII), (XV) et (XVI) mentionnées.
